# FASCICULE DE BREVET EUROPEEN

(11) **EP 2 760 575 B1**
(45) Date de publication et mention de la délivrance du brevet: **19.07.2017**
(21) Numéro de dépôt: 12762331.2
(22) Date de dépôt: 10.09.2012
(51) Int. Cl.: B01J 8/02, C10G 49/00

(54) **RÉACTEUR AVEC UN PLATEAU DISTRIBUTEUR POUR LA DISTRIBUTION D'UN MÉLANGE POLYPHASIQUE AVEC CHEMINÉES INCLINÉES EN PÉRIPHÉRIE**
REAKTOR MIT EINEM VERTEILUNGSSCHALE ZUR VERTEILUNG EINER MEHRPHASIGEN MISCHUNG MIT GENEIGTEN PERIPHEREN LEITUNGEN
REACTOR WITH A DISTRIBUTION TRAY FOR DISTRIBUTING A POLYPHASIC MIXTURE WITH INCLINED PERIPHERAL CONDUITS

(30) Priorité: 30.09.2011 FR 1102982
(43) Date de publication de la demande: 06.08.2014
(73) Titulaire: IFP Énergies nouvelles, 92852 Rueil-Malmaison Cedex (FR)
(72) Inventeur: BAZER-BACHI, Frederic, F-69540 Irigny (FR); AUGIER, Frederic, F-69360 Saint Symphorien d'Ozon (FR); HAROUN, Yacine, F-69200 Grigny (FR); BOYER, Christophe, F-69390 Charly (FR)
(86) Numéro de dépôt international: PCT/FR2012/000355
(87) Numéro de publication internationale: WO 2013/045770

(56) Documents cités:
- EP-A1- 2 075 056
- FR-A1- 2 853 260
- US-A1- 2011 081 282

## Description

### DOMAINE DE L'INVENTION

La présente invention concerne le domaine de la distribution de fluides polyphasiques dans les réacteurs catalytiques. Elle concerne plus particulièrement un plateau distributeur permettant d'assurer la distribution de fluides dans les réacteurs catalytiques de type lits fixe, les fluides s'écoulant à co-courant descendant plus particulièrement en régime dit "ruisselant".

La présente invention s'applique en particulier au domaine des distributeurs gaz/liquide employés pour la mise en oeuvre des réactions d'hydrocraquage, d'hydrotraitement, d'hydrodésulfuration, d'hydrodémétallation, d'hydrodéazotation, d'hydrogénations sélectives ou totales. La présente invention s'applique également au domaine des hydrogénations sélectives des essences de vapocraquage, aux hydrogénations des composés aromatiques dans des coupes aliphatiques et/ou naphténiques, et aux hydrogénations des oléfines dans des coupes aromatiques.

Plus généralement la présente invention s'applique dans tous les réacteurs à lits fixes nécessitant le mélange d'une phase gazeuse et d'une phase liquide, par exemple dans le cas des réacteurs pour la mise en oeuvre de réaction d'oxydation partielle ou totale, des réactions d'amination, d'acétyloxydation, d'ammoxydation et d'halogénation, en particulier de chloration.

Le plateau distributeur selon la présente invention est donc en général disposé dans une enceinte ou réacteur comportant une entrée d'un fluide liquide et une entrée d'un fluide gazeux, et contenant au moins un lit de solides granulaires placé en aval du plateau distributeur.

Dans le cadre de la présente invention, le plateau distributeur est disposé en tête du réacteur au dessus du lit de solide catalytique.

### EXAMEN DE L'ART ANTERIEUR

Pour améliorer la distribution des fluides gaz et liquide avec ces dispositifs, une possibilité utilisée dans l'art antérieur consiste à utiliser des plateaux distributeurs comportant une pluralité de canaux mélangeurs, également appelés cheminées, dédiés au passage du gaz et du liquide. Ces canaux mélangeurs peuvent être de différents types et positionnés suivant différentes configurations sur le plateau.

De tels dispositifs sont décrits dans les demandes de brevets FR 2 807 676, FR 2 745 202, FR 2 853 260 ou US 2007/0241467. De manière générale ces canaux mélangeurs sont disposés perpendiculairement au plateau distributeur, c'est à dire sensiblement verticalement.

Ces dispositifs limitent la hauteur du lit catalytique en raison de la hauteur des canaux mélangeurs et du fait que la plupart des réacteurs ont leur sommet généralement sous forme d'une calotte hémisphérique. La limitation de la hauteur du lit catalytique réduit l'activité catalytique du réacteur et par voie de conséquence la conversion.

La hauteur à partir de laquelle cette calotte hémisphérique commence est appelée ligne tangente ("tangent line" selon la terminologie anglo-saxonne). L'installation du plateau se fait par l'intermédiaire de panneaux d'une certaine taille, taille nécessairement inférieure au diamètre de la tubulure d'entrée dans le réacteur.

Le plateau est donc généralement monté dans le réacteur, à partir de panneaux introduits individuellement et fixés par la suite entre eux. Ces panneaux doivent pouvoir être installés dans le réacteur. La hauteur des cheminées fait qu'ils ne peuvent être mis à une hauteur dépassant significativement la ligne de tangence, pour des raisons d'encombrement et de difficulté d'installation, car la courbure hémisphérique du haut du réacteur empêche leur mise en place au niveau de la calotte hémisphérique. De fait, ils sont mêmes généralement situés sous cette ligne de tangence.

A iso-taille d'enceinte de réacteur, l'installation du plateau distributeur à un niveau plus bas dans le réacteur entraine qu'on ne peut donc pas toujours disposer du volume catalytique à la valeur souhaitée. Ou d'un autre point de vue, à volume de catalyseur donné, il est alors nécessaire d'utiliser une enceinte de réacteur de taille plus grande.

La présente invention a pour objet de pallier à cet inconvénient de l'art antérieur en proposant un plateau de distribution, qui permet son installation plus haut à l'intérieur du réacteur, c'est à dire plus précisément à une distance moindre du sommet hémisphérique du réacteur et éventuellement à un niveau situé à l'intérieur de la calotte hémisphérique. Par voie de conséquence, le plateau distributeur selon la présente invention permet d'augmenter la hauteur du lit catalytique et donc la conversion chimique.

### DESCRIPTION SOMMAIRE DE L'INVENTION

La présente invention décrit un plateau permettant la distribution d'un mélange polyphasique dans un réacteur fonctionnant en régime ruisselant, c'est à dire à co-courant descendant des phases gaz et liquide, le liquide constituant la phase dispersée ayant une vitesse superficielle inférieure à 1,5 cm/s, et la phase gaz constituant la phase continue.

Pratiquement le réacteur possède des parois verticales (1) et se termine par une calotte hémisphérique (2). Le plateau selon la présente invention est défini de manière à permettre son implantation plus haut dans le réacteur, éventuellement jusqu' à occuper une partie de l'espace défini par la calotte hémisphérique (2).

Le plateau distributeur (10) selon la présente invention est situé au-dessus d'un lit de particules solides (30) constituant le catalyseur, et comporte une pluralité de cheminées (3) caractérisé en ce qu'une partie de ces cheminées situées en périphérie, dites cheminées périphériques, présentent leur partie supérieure inclinée d'un angle alpha par rapport à la verticale. L'inclinaison de toutes les cheminées inclinées est approximativement dirigée vers le centre du réacteur. Ces cheminées seront désignées dans la suite par abréviation cheminées inclinées.

Selon un mode de réalisation préféré de l'invention, les cheminées inclinées sont celles formant la rangée périphérique la plus en proximité de la paroi (1 ou 2) de l'enceinte du réacteur et situées à une distance de la paroi (1 ou 2) de l'enceinte du réacteur comprise entre 25 et 250 mm. La notion de cheminées périphériques s'étend également à la seconde rangée de cheminées située à une distance de la paroi (1) du réacteur comprise entre 250 mm et 450 mm. Globalement donc la distance (D1) à la paroi sur laquelle s'étendent les cheminées périphériques est comprise entre 25 et 450 mm, et préférentiellement comprise entre 25 et 250 mm.

Toutes les cheminées du plateau distributeur (10), centrales ou périphériques, sont séparées d'un pas P compris entre 100 et 250 mm, et préférentiellement compris entre 100 et 200 mm.

Selon un mode de réalisation de l'invention, les cheminées périphériques inclinées et les cheminées non périphériques, dite cheminées centrales, ont une hauteur (Hc) comprise entre 100 et 500 mm et préférentiellement comprise entre 200 mm et 350 mm.

Plus précisément, les cheminées périphériques sont inclinées à partir d'une distance (d) par rapport à la base du plateau distributeur (10) comprise entre 10% et 80% de leur hauteur totale, préférentiellement entre 50% et 80 %.

Les cheminées centrales et périphériques (3) sont munies d'orifices de passage (4) prévus pour le liquide. Bien entendu, pour les cheminées périphériques une partie de ces orifices (4) peut se trouver sur la partie supérieure inclinée desdites cheminées.

Les cheminées centrales et périphériques (3) possèdent en outre une ouverture (5) à leur extrémité supérieure pour le passage du gaz.

Selon un mode de réalisation de l'invention, les orifices de passage pour le liquide (4) sont des orifices de forme circulaire ou des fentes sensiblement verticales.

Selon un mode de réalisation préféré de l'invention, le plateau (10) est muni d'un système de dispersion (20) placé sous ledit plateau (10) à une distance de celui ci comprise entre 10 mm et 100 mm. Ce système de dispersion est généralement constitué d'une grille ou de déflecteurs.

L'invention concerne également un procédé faisant appel au plateau tel que décrit précédemment destiné à effectuer des réactions d'hydrotraitement ou d'hydrogénation ou d'oxydation.

L'invention concerne également tout procédé faisant appel à un écoulement diphasique à co-courant descendant des phases gaz et liquide, dans lequel la phase gaz est la phase continue et la phase liquide est la phase dispersée, la dite phase liquide ayant une vitesse superficielle inférieure à 1,5 cm/s.

### DESCRIPTION DETAILLEE DE L'INVENTION

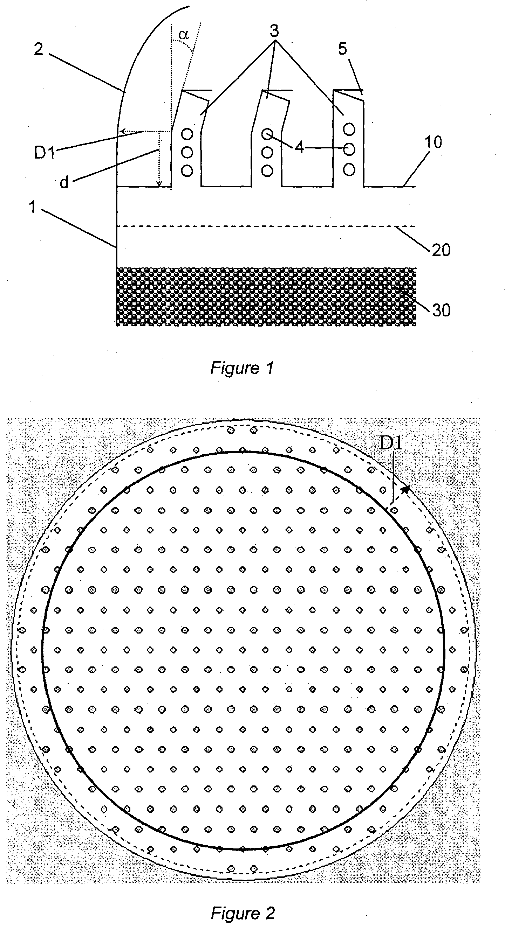

La figure 1 selon la présente invention montre un plateau distributeur selon la présente invention constitué de deux types de cheminées:
Les cheminées périphériques (3) constituant la rangée la plus extérieure dudit plateau ou les deux rangées les plus extérieures, présentent leur partie supérieure inclinée d'un angle alpha par rapport à la verticale, l'angle alpha étant compris entre 10° et 45°, préférentiellement entre 10° et 30°. L'inclinaison des cheminées périphériques est approximativement dirigée vers le centre du réacteur.

De manière préférée, l'angle d'inclinaison des cheminées situées sur la rangée la plus proche de la paroi (1,2) du réacteur est supérieur à l'angle d'inclinaison des cheminées situées sur la seconde rangée , un peu plus éloignée de la paroi.

Les cheminées dites périphériques sont situées à une distance D1 de la paroi (1) du réacteur comprise entre 25 mm et 450 mm, et préférentiellement comprise entre 25 mm et 250 mm.

Plus précisément, les cheminées périphériques sont inclinées à partir d'une distance (d) par rapport à la base du plateau distributeur comprise entre 10% et 80% de leur hauteur totale, préférentiellement entre 50% et 80%.

Les cheminées dites centrales occupent le reste du plateau (10). Elles sont identiques aux cheminées périphériques, excepté le fait qu'elles ne présentent aucune partie inclinée. Elles ont la même hauteur et la même répartition des orifices (4) de passage pour le liquide que les cheminées centrales.

Les cheminées centrales et périphériques possèdent en outre une ouverture (5) pour le passage du gaz située à l'extrémité supérieure. Cette ouverture (5) peut avoir diverses formes comme par exemple, et de manière non exhaustive, une forme en biseau ou un gros orifice occupant toute l'extrémité supérieure.

Les cheminées centrales et périphériques (3) ont une hauteur Hc repérée par rapport à la base du plateau (10) comprise entre 100 et 500 mm, de préférence entre 200 et 350 mm.

Le plateau (10) selon l'invention peut être utilisé dans un réacteur fonctionnant en régime ruisselant, dans lequel la phase gaz correspond à la phase continue de l'écoulement diphasique, et la phase liquide existe sous forme de filets avec une vitesse superficielle liquide inférieure à 1,5 cm/s.

Le plateau selon l'invention peut être muni d'un système de dispersion placé sous le plateau (10), mais au dessus du lit catalytique aval (30) à une distance comprise entre 10 et 100 mm de la base du plateau (10).

La figure 2 est une vue de dessus qui permet de mettre en évidence la distance D1. Cette distance D1 définit l'emplacement des cheminées périphériques inclinées qui sont situées entre la paroi du réacteur et la circonférence à distance D1 de ladite paroi.

L'invention est illustrée par l'exemple qui suit.

### EXEMPLE

Dans cet exemple deux plateaux sont comparés : l'un selon l'art antérieur comportant des cheminées ayant toute la même taille et la même forme, et l'autre selon l'invention comportant des cheminées périphériques inclinées permettant le positionnement du plateau plus haut dans le réacteur

### Plateau selon l'art antérieur

Le plateau distributeur comporte des cheminées de 250 mm de hauteur au dessus du plateau distributeur et de 50 mm de diamètre, comportant 3 séries d'orifices (4) pour le passage du liquide, situés respectivement à 50/100/150 mm de hauteur par rapport à la base des cheminées (3), avec une ouverture (5) en biseau de 50 mm dans la partie supérieure pour laisser passer le gaz.

Le pas entre les cheminées est de 200 mm.

Le plateau distributeur est situé 29 mm sous la ligne de tangence à partir de laquelle commence la calotte hémisphérique supérieure de la virole.

Le diamètre de la virole du réacteur est de 5000 mm et la hauteur de la calotte hémisphérique est de 2500 mm.

### Plateau selon l'invention

Les cheminées les plus proches de la paroi (1) sont inclinées à partir de 150 mm de hauteur, soit à partir d'une hauteur (d) correspondant à 60% de leur hauteur totale. L'angle d'inclinaison alpha par rapport à la verticale est égal à 15°. L'inclinaison de toutes les cheminées périphériques est sensiblement orientée vers le centre du réacteur.

Le plateau distributeur (10) peut donc être remonté d'une hauteur de 100 mm (250 - 150). Le plateau distributeur est donc maintenant situé 71 mm au dessus de la ligne de tangence. Ce gain en hauteur est utilisé pour augmenter la hauteur catalytique disponible dans le réacteur.

Le fonctionnement est étudié pour les deux types de plateaux avec les conditions opératoires communes suivantes:
Vitesse liquide d'arrivée dans le lit : 1 cm/s.
Température : 650K.
Pression : 40 Bars. (1 bar =10⁵ pascals)
   2% poids en soufre dans la charge.
   Masse volumique de la charge 800 kg.m⁻³
   Capacité calorifique de la charge 1800 J/kg/K.

Réaction chimique d'ordre 1 par rapport au composé soufré de la charge et par rapport à l'hydrogène.

Caractéristiques réaction : K0 (terme pré exponentiel) 5,1.10⁷, Ea (énergie d'activation) = 120 kJ/mol, DH (entahlpie de réaction) = 75 kJ/mol.

### Résultats:

Avec le plateau selon l'art antérieur la concentration en soufre obtenue en sortie = 10 ppm.

Avec le plateau selon l'invention on obtient un gain de 100 mm de hauteur de lit catalytique, soit une hauteur de lit catalytique de 3100 mm.

La hauteur initiale de 3000 mm de lit catalytique est augmentée de 100 mm gagnés par le positionnement du plateau, placé plus haut dans la virole. Ce gain de hauteur, et donc de volume catalytique, permet de pousser plus loin la désulfuration de la charge. La concentration en soufre en sortie passe à 7,3 ppm.

Le positionnement plus en hauteur du plateau distributeur selon l'invention a donc au final permis une augmentation du degré de désulfuration de plus de 25% par rapport au positionnement selon l'art antérieur.

## Revendications

1. Réacteur à écoulement descendant d'un mélange polyphasique comportant des parois verticales (1), une calotte supérieure (2) et un plateau distributeur (10) permettant d'assurer la distribution dudit mélange polyphasique dans ledit réacteur, le plateau (10) étant situé dans la partie supérieure du réacteur au-dessus d'un lit de particules catalytiques (30), et comportant une pluralité de cheminées (3) sensiblement perpendiculaires au plateau (10), munies d'orifices (4) pour le passage du liquide répartis sur toute la hauteur (Hc) desdites cheminées, et d'un orifice (5) pour le passage du gaz située à leur extrémité supérieure, **caractérisé en ce que** la partie des cheminées située en périphérie du plateau, (dite cheminées périphériques), présentent leur partie supérieure inclinée d'un angle alpha par rapport à la verticale, l'angle alpha ayant une valeur comprise entre 10° et 45°, l'inclinaison étant approximativement dirigée vers le centre du réacteur, et les cheminées périphériques étant situées à une distance D1 de la paroi (1 ou 2) du réacteur comprise entre 25 et 450 mm.

2. Réacteur à écoulement descendant selon la revendication 1, dans lequel la distance D1 sur laquelle s'étendent les cheminées périphériques par rapport à la paroi (1) du réacteur est comprise entre 25 et 250 mm.

3. Réacteur à écoulement descendant selon l'une quelconque des revendications 1 ou 2, dans lequel l'angle alpha de la partie inclinée des cheminées périphériques par rapport à la verticale est compris entre 10° et 30°.

4. Réacteur à écoulement descendant selon l'une quelconque des revendications 1 à 3, dans lequel les cheminées périphériques (3) sont inclinées à partir d'une distance d par rapport à la base du plateau distributeur (10) comprise entre 10% et 80% de la hauteur totale des cheminées, et préférentiellement entre 50 et 80 %.

5. Réacteur à écoulement descendant selon l'une quelconque des revendications 1 à 4, dans lequel les cheminées périphériques et centrales sont séparées d'un pas compris entre 100 et 250 mm, et préférentiellement compris entre 100 et 200 mm.

6. réacteur à écoulement descendant selon l'une quelconque des revendications 1 à 5, dans lequel les cheminées centrales et périphériques ont une hauteur (Hc) comprise entre 100 et 500 mm, et préférentiellement entre 200 et 350 mm.

7. Procédé d'hydrotraitement ou d'hydrogénation de coupes pétrolières ayant de C4 à C20 atomes de carbone utilisant le réacteur selon la revendication 1, le dit procédé fonctionnant en régime ruisselant, c'est à dire avec une phase liquide dispersée ayant une vitesse superficielle inférieure à 1,5 cm, et une phase gaz qui est la phase continue.

## Patentansprüche

1. Reaktor mit absteigender Strömung einer mehrphasigen Mischung, umfassend vertikale Wände (1), eine obere Kalotte (2) und eine Verteilungsschale (10), die es ermöglicht, die Verteilung der mehrphasigen Mischung im Reaktor zu gewährleisten, wobei die Schale (10) in dem oberen Teil des Reaktors über einem Bett aus katalytischen Teilchen (30) angeordnet ist und eine Vielzahl von Leitungen (3) im Wesentlichen senkrecht auf die Schalte (10) umfasst, die mit Öffnungen (4) für den Durchgang der Flüssigkeit, die auf der gesamten Höhe (Hc) der Leitungen verteilt sind, und einer Öffnung (5) für den Durchgangs des Gases, die an ihrem oberen Ende angeordnet ist, versehen sind, **dadurch gekennzeichnet, dass** der Teil der Leitungen, der sich an der Peripherie der Schale befindet (periphere Leitungen genannt), einen oberen Teil aufweist, der um einen Winkel Alpha in Bezug zur Vertikalen geneigt ist, wobei der Winkel Alpha einen Wert zwischen 10° und 45° aufweist, wobei die Neigung annähernd zur Mitte des Reaktors gerichtet ist, und wobei die peripheren Leitungen in einem Abstand D1 zur Wand (1 oder 2) des Reaktors zwischen 25 und 450 mm angeordnet sind.

2. Reaktor mit absteigender Strömung nach Anspruch 1, bei dem der Abstand D1, auf dem sich die peripheren Leitungen in Bezug zur Wand (1) des Reaktors erstrecken, zwischen 25 und 250 mm beträgt.

3. Reaktor mit absteigender Strömung nach einem der Ansprüche 1 oder 2, bei dem der Winkel Alpha des geneigten Teils der peripheren Leitungen in Bezug zur Vertikalen zwischen 10° und 30° beträgt.

4. Reaktor mit absteigender Strömung nach einem der Ansprüche 1 bis 3, bei dem die peripheren Leitungen (3) ab einem Abstand d in Bezug zur Basis der Verteilungsschale (10) zwischen 10 % und 80 % der Gesamthöhe der Leitungen und vorzugsweise zwischen 50 % und 80 % geneigt sind.

5. Reaktor mit absteigender Strömung nach einem der Ansprüche 1 bis 4, bei dem die peripheren und zentralen Leitungen um einen Abstand zwischen 100 und 250 mm und vorzugsweise zwischen 100 und 200 mm getrennt sind.

6. Reaktor mit absteigender Strömung nach einem der Ansprüche 1 bis 5, bei dem die zentralen und peripheren Leitungen eine Höhe (Hc) zwischen 100 und 500 mm und vorzugsweise zwischen 200 und 350 mm haben.

7. Verfahren zur Hydrobehandlung oder Hydrierung von Erdölfraktionen mit C4 bis C20 Kohlenstoffatomen, das den Reaktor nach Anspruch 1 verwendet, wobei das Verfahren im Rieselbetrieb funktioniert, d.h. mit einer dispergierten flüssigen Phase mit einer Oberflächengeschwindigkeit unter 1,5 cm und einer Gasphase, die die kontinuierliche Phase ist.

## Claims

1. A downflow reactor for polyphasic mixture comprising vertical walls (1), a spherical upper dome (2), and a distributor plate (10) for distributing said polyphasic mixture in said reactor, the plate (10) being located in the upper portion of the reactor above a bed of catalytic particles (30), and being constituted by a plurality of chimneys (3) approximately perpendicular to the plate (10), provided with orifices (4) for the passage of liquid distributed over the whole height (Hc) of said chimneys, and an orifice (5) for the passage of gas located at their upper ends, **characterized in that** the portion of the chimneys located at the periphery of the plate (those termed peripheral chimneys) have their upper portion inclined by an angle alpha with respect to the vertical, the angle alpha having a value in the range 10° to 45°, the inclination being approximately directed towards the centre of the reactor, and the peripheral chimneys being located at a distance (D1) in the range 25 to 450 mm from the wall (1 or 2) of the reactor.

2. A downflow reactor according to claim 1, in which the distance (D1) over which the peripheral chimneys extends with respect to the wall (1) of the reactor is in the range 25 to 250 mm.

3. A downflow reactor according to claim 1 or claim 2, in which the angle alpha of the inclined portion of the peripheral chimneys with respect to the vertical is in the range 10° to 30°.

4. A downflow reactor according to claims 1 to 3, in which the peripheral chimneys (3) are inclined starting from a distance (d) with respect to the base of the distributor plate (10) which is in the range 10% to 80% of the total height of the chimneys, preferably in the range 50% to 80%.

5. A downflow reactor according to any one of claims 1 to 4, in which the peripheral and central chimneys are separated by a pitch in the range 100 to 250 mm, preferably in the range 100 to 200 mm.

6. A downflow reactor according to any one of claims 1 to 5, in which the central and peripheral chimneys have a height (Hc) in the range 100 to 500 mm, preferably in the range 200 to 350 mm.

7. A process for the hydrotreatment or hydrogenation of oil cuts containing C4 to C20 carbon atoms using the downflow reactor in accordance with claim 1, said process functioning in trickle bed mode, i.e. with a dispersed liquid phase having a surface velocity of less than 1.5 cm, and a gas phase which is the continuous phase.
